# EUROPÄISCHE PATENTSCHRIFT

(11) **EP 3 130 426 B1**
(45) Veröffentlichungstag und Bekanntmachung des Hinweises auf die Patenterteilung: **30.01.2019**
(21) Anmeldenummer: 15180878.9
(22) Anmeldetag: 13.08.2015
(51) Int. Cl.: B23K 37/02, B23K 26/00

(54) **WERKZEUGMASCHINE MIT EINER STANZVORRICHTUNG UND EINER LASERBEARBEITUNGSVORRICHTUNG**
MACHINE TOOL WITH A STAMPING DEVICE AND A LASER PROCESSING DEVICE
MACHINE-OUTIL EQUIPEE D'UN DISPOSITIF D'ESTAMPAGE ET D'UN DISPOSITIF D'USINAGE LASER

(43) Veröffentlichungstag der Anmeldung: 15.02.2017
(73) Patentinhaber: TRUMPF Werkzeugmaschinen GmbH + Co. KG, 71254 Ditzingen (DE)
(72) Erfinder: Tränklein, Dennis, 71154 Nufringen (DE)
(74) Vertreter: Kohler Schmid Möbus Patentanwälte

(56) Entgegenhaltungen:
- EP-A1- 2 468 449
- EP-A2- 0 412 584
- WO-A1-2014/196478
- JP-A- S61 154 781

## Beschreibung

Die Erfindung betrifft eine Werkzeugmaschine zum Bearbeiten von Werkstücken, insbesondere von Blechen,
- mit einer Tragstruktur,
- mit einer an der Tragstruktur gelagerten Stanzvorrichtung, mittels derer ein Werkstück stanzend bearbeitbar ist,
- mit einer an der Tragstruktur gelagerten Laserbearbeitungsvorrichtung, mittels derer das Werkstück laserbearbeitbar ist und die über die Tragstruktur an die Stanzvorrichtung derart angebunden ist, dass sie durch den Betrieb der Stanzvorrichtung zu einer Bewegung anregbar ist,
- mit einer Laser-Zustellvorrichtung, mittels derer die Laserbearbeitungsvorrichtung zur Positionierung gegenüber dem Werkstück mit einer Aktivierungsbewegung in eine Funktionsstellung und außerdem in eine von der Funktionsstellung abliegende Stellung zustellbar ist, wobei das Werkstück mittels der in die Funktionsstellung zugestellten Laserbearbeitungsvorrichtung laserbearbeitbar ist sowie
- mit einer zwischen der Stanzvorrichtung und der Laserbearbeitungsvorrichtung vorgesehenen Federungsvorrichtung, die eine Federsteifigkeit aufweist und über welche die Laserbearbeitungsvorrichtung unter Reduzierung der Anregung durch den Betrieb der Stanzvorrichtung an der Tragstruktur abstützbar ist.

An Stanz-Laser-Kombimaschinen der vorstehenden Art wird die stanzende Bearbeitung und die Laserbearbeitung von Werkstücken nacheinander durchgeführt. Während des Stanzbetriebs ist die Laserbearbeitungsvorrichtung mittels einer Laser-Zustellvorrichtung in eine Parkposition abseits des stanzend bearbeiteten Werkstücks bewegt. Zur Laserbearbeitung des Werkstücks wird die Laserbearbeitungsvorrichtung durch die Laser-Zustellvorrichtung in eine werkstücknahe Funktionsstellung überführt.

Aufgrund der gemeinsamen Anbringung der Stanzvorrichtung und der Laserbearbeitungsvorrichtung an dem Maschinengestell besteht die Gefahr, dass Erschütterungen und Stöße, die während des Stanzbetriebs der Werkzeugmaschine auftreten, auf die in der Parkposition angeordnete Laserbearbeitungsvorrichtung übertragen werden. Um zu verhindern, dass die Laserbearbeitungsvorrichtung aufgrund der stanzenden Werkstückbearbeitung in Mitleidenschaft gezogen wird, sind im Falle des Standes der Technik besondere konstruktive Vorkehrungen getroffen.

An einer gattungsgemäßen Werkzeugmaschine, die von der Firma TRUMPF (Adresse: Johann-Maus-Straße 2, 71254 Ditzingen, Deutschland) unter der Bezeichnung "TruMatic® 6000 fiber" angeboten wird, ist die Laserbearbeitungsvorrichtung gemeinsam mit der Laser-Zustellvorrichtung auf einer Grundplatte montiert, die ihrerseits bei Parkstellung der Laserbearbeitungsvorrichtung federnd an dem auch mit der Stanzvorrichtung versehenen Maschinengestell gelagert ist. Die Federung sorgt dafür, dass die mit dem Stanzbetrieb der Maschine verbundenen Erschütterungen und Stöße nicht ungefiltert auf die Laserbearbeitungsvorrichtung übertragen werden. Wird ein Werkstück laserbearbeitet und befindet sich die Laserbearbeitungsvorrichtung folglich in der werkstücknahen Funktionsstellung, so ist die federnde Lagerung der mit der Laserbearbeitungsvorrichtung versehenen Grundplatte mittels einer eigens zu diesem Zweck vorgesehenen Vorrichtung deaktiviert und die Laserbearbeitungsvorrichtung ist über die Grundplatte starr an das Maschinengestell der gattungsgemäßen Werkzeugmaschine angebunden. Infolge der starren Anbindung der Laserbearbeitungsvorrichtung an das Maschinengestell kann die Laserbearbeitung des Werkstücks mit der erforderlichen Präzision durchgeführt werden.

Eine weitere gattungsgemäße Werkzeugmaschine ist bekannt aus EP 0 412 584 A2. Diese Druckschrift offenbart eine Stanz-Laser-Kombimaschine mit einem Maschinenrahmen, an dem sowohl eine Stanzvorrichtung als auch ein Laserschneidkopf gelagert sind. Während des Stanzbetriebs erfolgt die Lagerung des Laserschneidkopfs an dem Maschinenrahmen über gedämpfte Federn. Beim Laserschneiden ist der Laserschneidkopf unter Schwerkraftwirkung weitestgehend starr an dem Maschinenrahmen abgestützt. Außerdem ist der Laserschneidkopf auf eine nicht im Einzelnen beschriebene Art und Weise in vertikaler Richtung frei positionierbar.

Den gattungsgemäßen Stand der Technik konstruktiv zu vereinfachen, ist Aufgabe der vorliegenden Erfindung.

Erfindungsgemäß gelöst wird diese Aufgabe durch die Werkzeugmaschine gemäß Patentanspruch 1.

Im Falle der Erfindung dient die Laser-Zustellvorrichtung nicht nur zur Überführung der Laserbearbeitungsvorrichtung in die Funktionsstellung und in eine von der Funktionsstellung abliegende, insbesondere werkstückferne Stellung, beispielsweise in eine Parkstellung, sondern darüber hinaus auch dazu, die Lagerung der Laserbearbeitungsvorrichtung an der Tragstruktur an wechselnde Betriebssituationen anzupassen. Befindet sich die Laserbearbeitungsvorrichtung in der Funktionsstellung und soll die Laserbearbeitungsvorrichtung zur Laserbearbeitung eines Werkstücks genutzt werden, so sorgt die Laser-Zustellvorrichtung für eine hohe Federsteifigkeit der Federungsvorrichtung, über welche die Laserbearbeitungsvorrichtung an die Tragstruktur der erfindungsgemäßen Werkzeugmaschine angebunden ist. Vorzugsweise kann mittels der Laser-Zustellvorrichtung eine starre Anbindung der in die Funktionsstellung überführten Laserbearbeitungsvorrichtung an die Trag-struktur realisiert werden. Infolge der erhöhten Federsteifigkeit der Federungsvorrichtung kann die Laserbearbeitung, beispielsweise ein Laserschneiden oder Laserschweißen des betreffenden Werkstücks, mit hoher Präzision durchgeführt werden. Wird die Laserbearbeitungsvorrichtung nicht zur Werkstückbearbeitung genutzt und befindet sich die erfindungsgemäße Werkzeugmaschine im Stanzmodus, so ist die Federsteifigkeit der Federungsvorrichtung mittels der Laser-Zustellvorrichtung reduziert. Infolgedessen ist die Federungsvorrichtung in der Lage, Erschütterungen und Stöße, wie sie aufgrund des Stanzbetriebs auftreten, abzufedern und dadurch schädliche Auswirkungen des Stanzbetriebs auf die Laserbearbeitungsvorrichtung zu verhindern. Aufgrund der von der Laser-Zustellvorrichtung dementsprechend übernommenen Doppelfunktion ergibt sich ein einfacher konstruktiver Aufbau der erfindungsgemäßen Werkzeugmaschine.

Besondere Ausführungsarten der Erfindung gemäß dem unabhängigen Patentanspruch 1 ergeben sich aus den abhängigen Patentansprüchen 2 bis 10.

Ausweislich Patentanspruch 2 wird im Falle einer bevorzugten Bauart der erfindungsgemäßen Werkzeugmaschine die Federsteifigkeit der zur Lagerung der Laserbearbeitungsvorrichtung vorgesehenen Federungsvorrichtung dadurch modifiziert, dass die Laser-Zustellvorrichtung die Länge einer Feder der Federungsvorrichtung verändert. Bei entsprechender Federbauart bietet diese Maßnahme eine einfache Möglichkeit, die "Härte" der Lagerung der Laserbearbeitungsvorrichtung an der Tragstruktur der erfindungsgemäßen Werkzeugmaschine zu variieren. Als Federbauarten in Frage kommen beispielsweise Schrauben-, Blatt- und Tellerfedern aber auch Elastomer- und Gasfedern.

Eine erfindungsgemäß bevorzugte konstruktive Möglichkeit zur möglichst starren Lagerung der Laserbearbeitungsvorrichtung in der Funktionsstellung ist Gegenstand von Patentanspruch 3. Ein tragstrukturseitiger Vorrichtungsanschlag der erfindungsgemäßen Werkzeugmaschine sorgt für eine im Wesentlichen spielfreie Abstützung der in die Funktionsstellung bewegten Laserbearbeitungsvorrichtung in der Richtung der Aktivierungsbewegung. In der Gegenrichtung ist die Laserbearbeitungsvorrichtung über die Feder der Federungsvorrichtung an der Tragstruktur abgestützt, wobei die Feder der Federungsvorrichtung mittels der Laser-Zustellvorrichtung gestaucht ist. Insgesamt ergibt sich damit sowohl in der Richtung der Aktivierungsbewegung der Laserbearbeitungsvorrichtung als auch in der Gegenrichtung eine im Wesentlichen starre Lagerung der Laserbearbeitungsvorrichtung, wie sie für die Durchführung einer hochpräzisen Laserbearbeitung eines Werkstücks unerlässlich ist.

Patentanspruch 4 betrifft die konstruktive Umsetzung des Lagerungskonzepts gemäß Patentanspruch 3 im Einzelnen. Die Laser-Zustellvorrichtung der beanspruchten Erfindungsbauart umfasst ein der Tragstruktur der Werkzeugmaschine zugeordnetes tragstrukturseitiges Antriebselement sowie ein vorrichtungsseitiges Antriebselement, das mit der relativ zu der Tragstruktur beweglichen Laserbearbeitungsvorrichtung bewegungsverbunden ist. Das tragstrukturseitige Antriebselement der Laser-Zustellvorrichtung ist in der Gegenrichtung der Aktivierungsbewegung der Laserbearbeitungsvorrichtung an der Tragstruktur der erfindungsgemäßen Werkzeugmaschine abgestützt und folglich in dieser Richtung federnd gelagert, wenn sich die Laserbearbeitungsvorrichtung in einer Stellung abseits der Funktionsstellung befindet. Die federnde Lagerung des tragstrukturseitigen Antriebselements bewirkt eine entsprechende federnde Lagerung des mit dem tragstrukturseitigen Antriebselement zusammenwirkenden vorrichtungsseitigen Antriebselements und über dieses auch eine entsprechende federnde Lagerung der mit dem vorrichtungsseitigen Antriebselement bewegungsverbundenen Laserbearbeitungsvorrichtung. Ausgehend von der Stellung abseits der Funktionsstellung wird die Laserbearbeitungsvorrichtung infolge einer von dem vorrichtungsseitigen Antriebselement relativ zu dem tragstrukturseitigen Antriebselement ausgeführten Bewegung mit einer Aktivierungsbewegung in die Funktionsstellung überführt. In der Funktionsstellung ist die Laserbearbeitungsvorrichtung über den tragstrukturseitigen Vorrichtungsanschlag in der Richtung der Aktivierungsbewegung abgestützt und folglich an einer weitergehenden Bewegung in der Richtung der Aktivierungsbewegung gehindert. Eine fortgesetzte Betätigung der Laser-Zustellvorrichtung führt nun dazu, dass sich das tragstrukturseitige Antriebselement relativ zu dem vorrichtungsseitigen Antriebselement in der Gegenrichtung der Antriebsbewegung der Laserbearbeitungsvorrichtung verlagert und dadurch die Feder der Federungsvorrichtung staucht und die Federsteifigkeit der Federungsvorrichtung erhöht, die zur Abstützung der Laserbearbeitungsvorrichtung in der Gegenrichtung der Aktivierungsbewegung der Laserbearbeitungsvorrichtung vorgesehen ist.

Mit konstruktiv besonders einfachen Mitteln lassen sich geradlinige, längs einer Laser-Zustellachse ausgeführte Bewegungen des vorrichtungsseitigen Antriebselements und des tragstrukturseitigen Antriebselements der Laser-Zustellvorrichtung realisieren (Patentanspruch 5).

Für die Laser-Zustellvorrichtung der erfindungsgemäßen Werkzeugmaschine sind unterschiedliche Bauarten denkbar. Bevorzugt wird ausweislich Patentanspruch 6 eine als Kolben-Zylinder-Einheit vorgesehene Laser-Zustellvorrichtung. Der Zylinder der Kolben-Zylinder-Einheit ist dabei als vorrichtungsseitiges Antriebselement und der Kolben der Kolben-Zylinder-Einheit als tragstrukturseitiges Antriebselement der Laser-Zustellvorrichtung vorgesehen.

Von besonderem Vorteil ist eine Laser-Zustellvorrichtung in Form einer pneumatischen Kolben-Zylinder-Einheit (Patentanspruch 7). Aufgrund der Kompressibilität der in dem Zylinder der pneumatischen Kolben-Zylinder-Einheit anstehenden Druckluft ist der Kolben im Innern des Zylinders elastisch beweglich. In Kombination mit einer Feder der Federungsvorrichtung für die Laserbearbeitungsvorrichtung bildet eine pneumatische Kolben-Zylinder-Einheit ein Feder-Dämpfer-System.

Im Falle der Erfindungsbauart gemäß Patentanspruch 8 ist die Laserbearbeitungsvorrichtung sowohl in der Richtung der Aktivierungsbewegung als auch in der Gegenrichtung der Aktivierungsbewegung federnd an der Tragstruktur der erfindungsgemäßen Werkzeugmaschine gelagert. Damit verbunden ist ein umfassender Schutz der Laserbearbeitungsvorrichtung gegen eine Beeinträchtigung durch mit dem Stanzbetrieb der Werkzeugmaschine verbundene Erschütterungen und Stöße.

Im Interesse einer konstruktiv besonders einfachen Gestaltung ist im Falle der erfindungsgemäßen Werkzeugmaschine gemäß Patentanspruch 9 vorgesehen, dass ein und dasselbe Bauteil die in die Funktionsstellung zugestellte Laserbearbeitungsvorrichtung in der Richtung der Aktivierungsbewegung und die Feder der Federungsvorrichtung für die Laserbearbeitungsvorrichtung in der Gegenrichtung abstützt.

Patentanspruch 10 betrifft eine besonders praxisrelevante Ausführung der erfindungsgemäßen Werkzeugmaschine. Die Tragstruktur, an welcher sowohl die Stanzvorrichtung als auch die Laserbearbeitungsvorrichtung der Werkzeugmaschine gelagert sind, kann gemeinschaftlich mit der Stanzvorrichtung und der Laserbearbeitungsvorrichtung in Querrichtung der Aktivierungsbewegung, insbesondere in einer senkrecht zu einer Laser-Zustellachse verlaufenden Richtung verfahren. Derartige Verfahrbewegungen können zur Positionierung der Stanzvorrichtung und/oder der Laserbearbeitungsvorrichtung relativ zu einem zu bearbeitenden Werkstück dienen aber auch als Arbeitsbewegungen ausgeführt werden. In jedem Fall kann ein und derselbe Antrieb sowohl zur Erzeugung der Bewegungen der Stanzvorrichtung als auch zur Erzeugung der Bewegungen der Laserbearbeitungsvorrichtung genutzt werden. Infolgedessen ist diese Bauart der erfindungsgemäßen Werkzeugmaschine besonders energie- und kosteneffizient.

Nachfolgend wird die Erfindung anhand beispielhafter schematischer Darstellungen näher erläutert. Es zeigen:
- Figur 1: eine Teildarstellung einer Stanz-Laser-Kombimaschine mit einer Stanzvorrichtung und eine Laserbearbeitungsvorrichtung an einer gemeinsamen Tragstruktur,
- Figur 2: die Laserbearbeitungsvorrichtung gemäß Figur 1 in einer Parkstellung an der Tragstruktur und mit einer funktionsfähigen Federungsvorrichtung zwischen der Tragstruktur und der Laserbearbeitungsvorrichtung,
- Figur 3: die Laserbearbeitungsvorrichtung gemäß den Figuren 1 und 2 in einer Funktionsstellung an der Tragstruktur bei funktionsfähiger Federungsvorrichtung und
- Figur 4: die Laserbearbeitungsvorrichtung gemäß den Figuren 1 bis 3 in der Funktionsstellung an der Tragstruktur bei deaktivierter Federungsvorrichtung.

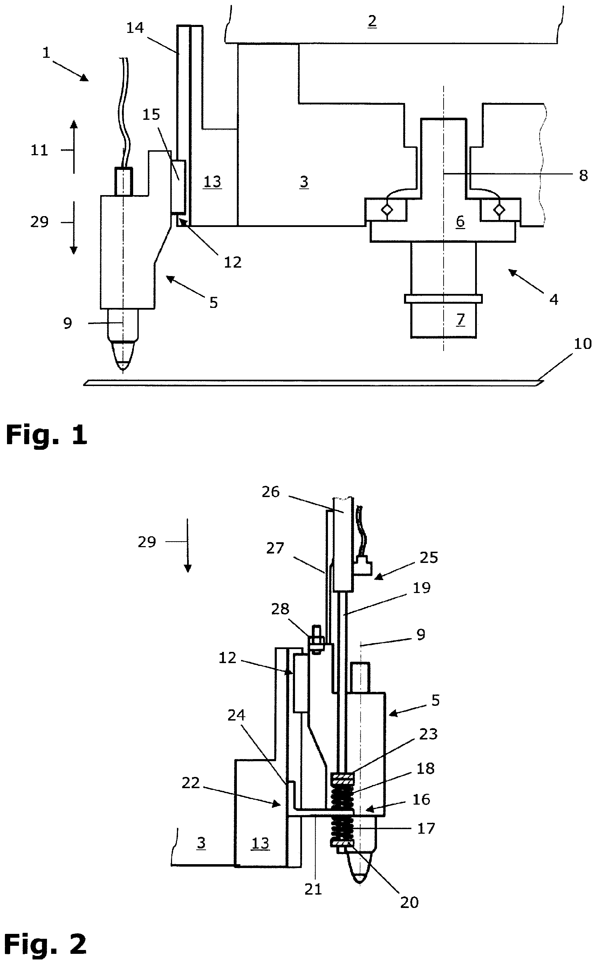

Gemäß Figur 1 weist eine als Stanz-Laser-Kombimaschine ausgeführte Werkzeugmaschine 1 ein Maschinengestell 2 auf. An dem Maschinengestell 2 ist eine Tragstruktur 3 senkrecht zu der Zeichenebene von Figur 1 verfahrbar. Die Tragstruktur 3 lagert eine Stanzvorrichtung 4 sowie eine Laserbearbeitungsvorrichtung in Form eines Laserschneidkopfs 5. Sowohl die Stanzvorrichtung 4 als auch der Laserschneidkopf 5 sind herkömmlicher Bauart.

Die Stanzvorrichtung 4 umfasst in gewohnter Weise einen Stößel 6 mit einer Werkzeugaufnahme 7, in die ein Stanzstempel eingewechselt werden kann. Mittels nicht im Einzelnen dargestellter Antriebsvorrichtungen kann der Stößel 6 gemeinsam mit der Werkzeugaufnahme 7 und einem in die Werkzeugaufnahme 7 eingewechselten Stanzstempel mit einem Arbeitshub und einem sich an den Arbeitshub anschließenden Rückhub längs einer Stanz-Hubachse 8 bewegt und um die Stanz-Hubachse 8 dreheingestellt werden. Der Laserschneidkopf 5 ist in der nachstehend noch im Einzelnen beschriebenen Weise längs einer Laser-Zustellachse 9 positionierbar. Sowohl die Stanzvorrichtung 4 als auch der Laserschneidkopf 5 der Werkzeugmaschine 1 dienen zur Bearbeitung eines in den Figuren 1, 3 und 4 angedeuteten Blechs 10, das während der Bearbeitung von einer herkömmlichen und der Einfachheit halber nicht gezeigten Werkstückauflage unterfangen wird.

In Figur 1 ist der Laserschneidkopf 5 längs der Laser-Zustellachse 9 in eine werkstücknahe Funktionsstellung bewegt. Befindet sich der Laserschneidkopf 5 in der Funktionsstellung, so kann das Blech 10 mittels eines von dem Laserschneidkopf 5 auf das Blech 10 gerichteten Laserstrahls schneidend bearbeitet werden. Zur schneidenden Blechbearbeitung auszuführende Relativbewegungen von Laserschneidkopf 5 und Blech 10 werden zum einen durch Bewegungen der den Laserschneidkopf 5 lagernden Tragstruktur 3 senkrecht zu der Zeichenebene von Figur 1 und zum anderen durch zu den Bewegungen der Tragstruktur 3 senkrechten Horizontalbewegungen des Blechs 10 erzeugt, wobei eine Überlagerung der in den beiden Achsrichtungen ausgeführten Bewegungen möglich ist. Damit die schneidende Bearbeitung des Blechs 10 mit der erforderlichen Präzision durchgeführt werden kann, muss der in der Funktionsstellung befindliche Laserschneidkopf 5 möglichst starr an die Tragstruktur 3 angebunden sein, die ihrerseits spielfrei an dem Maschinengestell 2 geführt ist.

Die Stanzvorrichtung 4 ist während des Schneidbetriebs der Werkzeugmaschine 1 stillgesetzt. Wie in Figur 1 erkennbar, ist dabei der Stößel 6 mit der Werkzeugaufnahme 7 längs der Stanz-Hubachse 8 von dem Blech 10 zurückgezogen. Umgekehrt ist bei Stanzbetrieb der Werkzeugmaschine 1 der Laserschneidkopf 5 gegenüber seiner in Figur 1 dargestellten Funktionsstellung längs der Laser-Zustellachse 9 mit einer Rückzugsbewegung gegenüber dem Blech 10 in eine Parkstellung angehoben. Die Richtung der Rückzugsbewegung des Laserschneidkopfs 5 ist in Figur 1 durch einen Pfeil 11 veranschaulicht. In Figur 2 ist der Laserschneidkopf 5 in der werkstückfernen Parkstellung gezeigt. Das Blech 10 ist in Figur 2 nicht dargestellt. Zwischen dem in der Parkstellung befindlichen Laserschneidkopf 5 und der Oberseite des Blechs 10 besteht ein Abstand, der derart bemessen ist, dass das Blech 10 die für die stanzende Bearbeitung erforderlichen Bewegungen ausführen kann, ohne mit dem Laserschneidkopf 5 zu kollidieren.

Bei den Bewegungen in die Parkstellung und in die Funktionsstellung ist der Laserschneidkopf 5 mittels einer Linearführung 12 an einer mit der Tragstruktur 3 starr verbundenen Grundplatte 13 längs der Laser-Zustellachse 9 geführt. Die Linearführung 12 umfasst zu diesem Zweck eine Führungsschiene 14 an der Grundplatte 13 sowie einen auf der Führungsschiene 14 aufsitzenden Führungsschlitten 15 an dem Laserschneidkopf 5.

Mit dem Stanzbetrieb der Werkzeugmaschine 1 sind Stöße und Erschütterungen verbunden, die sich ausgehend von der Stanzvorrichtung 4 über die Tragstruktur 3 und die Grundplatte 13 bis zu dem Laserschneidkopf 5 fortpflanzen.

Damit der Laserschneidkopf 5 durch die stanzende Bearbeitung des Blechs 10 und die damit verbundenen Erschütterungen und Stöße nicht in Mitleidenschaft gezogen wird, ist zwischen der Stanzvorrichtung 4 und dem Laserschneidkopf 5, im Einzelnen zwischen der Grundplatte 13 und dem Laserschneidkopf 5, eine Federungsvorrichtung 16 vorgesehen.

Gemäß Figur 2 umfasst die Federungsvorrichtung 16 eine untere Feder 17 und eine obere Feder 18. In dem dargestellten Beispielsfall sind sowohl die untere Feder 17 als auch die obere Feder 18 als Schraubenfeder ausgeführt. Die Federsteifigkeit der oberen Feder 18 der Federungsvorrichtung 16 ist derart gewählt, dass die obere Feder 18 unter der Wirkung der sie in Schwerkraftrichtung belastenden Massen nur unvollständig gestaucht wird.

Beide Federn 17, 18 sitzen auf einer Kolbenstange 19 auf, wobei die untere Feder 17 zwischen einem mit der Kolbenstange 19 verbundenen unteren Federwiderlager 20 und der Unterseite eines horizontalen Schenkels 21 eines Widerlagerwinkels 22 und die obere Feder 18 zwischen einem oberen Federwiderlager 23 an der Kolbenstange 19 und der Oberseite des horizontalen Schenkels 21 des Widerlagerwinkels 22 vorgespannt ist. Der Widerlagerwinkel 22 ist an einem vertikalen Schenkel 24 fest mit der Grundplatte 13 verbunden. Die Kolbenstange 19 durchsetzt den horizontalen Schenkel 21 des Widerlagerwinkels 22 derart, dass Längsbewegungen der Kolbenstange 19 relativ zu dem Widerlagerwinkel 22 möglich sind.

Die Kolbenstange 19 ist Teil einer als Laser-Zustellvorrichtung vorgesehenen Kolben-Zylinder-Einheit 25, die in dem dargestellten Beispielsfalls mit Druckluft betrieben wird. Die Kolben-Zylinder-Einheit 25 umfasst außerdem als dem Laserschneidkopf 5 zugeordnetes vorrichtungsseitiges Antriebselement einen Zylinder 26, der ebenso wie die Kolbenstange 19 parallel zu der Laser-Zustellachse 9 verläuft und der in seinem Inneren einen an der Kolbenstange 19 angebrachten und in den Abbildungen verdeckten Kolben längs der Laser-Zustellachse 9 führt. Der Kolben der Kolben-Zylinder-Einheit 25 bildet ein der Tragstruktur 3 zugeordnetes tragstrukturseitiges Antriebselement.

Über einen Verbindungsstab 27 ist der Zylinder 26 der Kolben-Zylinder-Einheit 25 fest mit dem Laserschneidkopf 5 verbunden. Nahe dem Ansatz des Verbindungsstabs 27 ist der Laserschneidkopf 5 mit einem zu dem Betrachter von Figur 2 hin vorspringenden Positionieranschlag 28 versehen.

In Figur 2 befindet sich die Federungsvorrichtung 16 bei Parkstellung des Laserschneidkopfs 5 im Ausgangszustand. Sowohl die untere Feder 17 als auch die obere Feder 18 besitzen eine verhältnismäßig geringe Federsteifigkeit. Mit dem Stanzbetrieb der Werkzeugmaschine 1 verbundene Erschütterungen und Stöße, die sich ausgehend von der Stanzvorrichtung 4 bis zu dem an der Grundplatte 13 befestigten Widerlagerwinkel 22 fortpflanzen, werden daher durch die an dem horizontalen Schenkel 21 des Widerlagerwinkels 22 abgestützten Federn 17, 18 längs der Laser-Zustellachse 9 verhältnismäßig weich auf die Kolbenstange 19 der Kolben-Zylinder-Einheit 25 übertragen. Nachdem die im Inneren des Zylinders 26 der Kolben-Zylinder-Einheit 25 anstehende Druckluft kompressibel ist, kann die Kolben-Zylinder-Einheit 25 nach Art eines Stoßdämpfers die infolge des Stanzbetriebs auftretenden Schwingungen der Federn 17, 18 dämpfen. Die bearbeitungsbedingten Erschütterungen und Stöße erreichen folglich allenfalls stark gefiltert den Laserschneidkopf 5, der gegebenenfalls Ausgleichsbewegungen längs der Laser-Zustellachse 9 ausführt, bei denen der Laserschneidkopf 5 über den mit dem Laserschneidkopf 5 mitschwingenden Führungsschlitten 15 und die tragstrukturfeste Führungsschiene 14 der Linearführung 12 an der Grundplatte 13 geführt wird. Insbesondere Beschädigungen des Laserschneidkopfs 5 und/ oder ein unerwünschtes Verstellen von an dem Laserschneidkopf 5 vorgesehenen optischen Elementen wird auf diese Art und Weise durch die Federungsvorrichtung 16 wirksam verhindert.

Ist ein Stanzvorgang beendet und soll das Blech 10 mittels des Laserschneidkopfs 5 schneidend bearbeitet werden, so wird die Stanzvorrichtung 4 von dem Blech 10 in die Position gemäß Figur 1 zurückgezogen und der Laserschneidkopf 5 wird mittels der Kolben-Zylinder-Einheit 25 aus der Parkstellung gemäß Figur 2 mit einer Aktivierungsbewegung längs der Laser-Zustellachse 9 in die Funktionsstellung abgesenkt. Die Richtung der Aktivierungsbewegung des Laserschneidkopfs 5 ist in Figur 2 durch einen Pfeil 29 dargestellt.

Wird die Kolben-Zylinder-Einheit 25 zur Erzeugung einer Aktivierungsbewegung des Laserschneidkopfs 5 betätigt, so bewegt sich der Zylinder 26 der Kolben-Zylinder-Einheit 25 relativ zu der Kolbenstange 19 und dem im Innern des Zylinders 26 geführten Kolben längs der Laser-Zustellachse 9 nach unten. Mit dem Zylinder 26 senkt sich der damit verbundene Laserschneidkopf 5 mit einer Aktivierungsbewegung längs der Laser-Zustellachse 9 ab. Die Federungsvorrichtung 16 verbleibt zunächst im Ausgangszustand. Auch bei der Aktivierungsbewegung wird der Laserschneidkopf 5 durch die Linearführung 12 längs der Laser-Zustellachse 9 geführt.

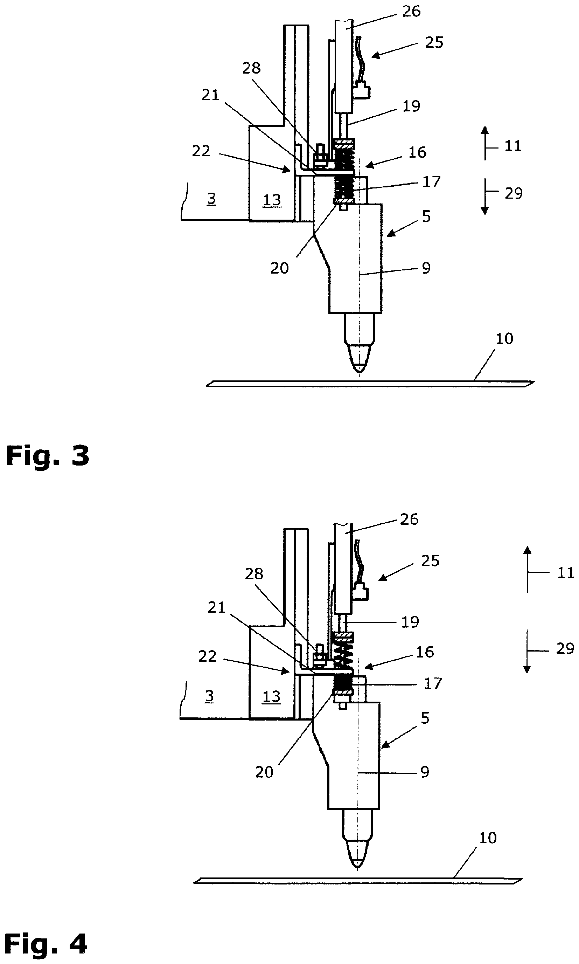

Die Aktivierungsbewegung des Laserschneidkopfs 5 endet und die Funktionsstellung des Laserschneidkopfs 5 ist erreicht, sobald der an dem Laserschneidkopf 5 angebrachte Positionieranschlag 28 auf den als tragstrukturseitiger Vorrichtungsanschlag dienenden Widerlagerwinkel 22, im Einzelnen auf dessen horizontalen Schenkel 21, aufläuft und sich damit die Verhältnisse gemäß Figur 3 ergeben. Über die untere Feder 17 der Federungsvorrichtung 16 ist der Laserschneidkopf 5 nach wie vor in der durch den Pfeil 11 veranschaulichten Gegenrichtung der Aktivierungsbewegung des Laserschneidkopfs 5 federnd an dem als tragstrukturseitiges Federwiderlager genutzten Widerlagerwinkel 22 und somit an der Tragstruktur 3 der Werkzeugmaschine 1 abgestützt.

Eine fortgesetzte Betätigung der Kolben-Zylinder-Einheit 25 hat aufgrund der in der Richtung 29 der Aktivierungsbewegung wirksamen Abstützung des Laserschneidkopfs 5 durch den Widerlagerwinkel 22 keine weitere Absenkung des Laserschneidkopfs 5 zur Folge sondern führt viel mehr dazu, dass die Kolbenstange 19 bei in der Funktionsstellung verbleibendem Laserschneidkopf 5 weiter in den Zylinder 26 der Kolben-Zylinder-Einheit 25 einfährt und dass sich dementsprechend der Kolben im Innern des Zylinders 26 relativ zu diesem in der Gegenrichtung 11 der Aktivierungsbewegung des Laserschneidkopfs 5 bewegt. Dadurch wird die zwischen der Unterseite des horizontalen Schenkels 21 des Widerlagerwinkels 22 einerseits und dem unteren Federwiderlager 20 an der Kolbenstange 19 andererseits vorgespannte untere Feder 17 gestaucht, bis die Windungen der unteren Feder 17 dicht gepackt aufeinander liegen und folglich einen längs der Laser-Zustellachse 9 starren Körper bilden (Figur 4).

Damit ist der Laserschneidkopf 5 längs der Laser-Zustellachse 9 spielfrei an dem Widerlagerwinkel 22 und über diesen und die Grundplatte 13 an der Tragstruktur 3 und dem Maschinengestell 2 der Werkzeugmaschine 1 gelagert. Folglich kann die schneidende Bearbeitung des Blechs 10 mittels des Laserschneidkopfs 5 nun hochpräzise durchgeführt werden.

Ist die schneidende Blechbearbeitung abgeschlossen und soll eine weitere Stanzbearbeitung folgen, so wird die Kolben-Zylinder-Einheit 25 derart betätigt, dass zunächst die Kolbenstange 19 aus dem seine Position längs der Laser-Zustellachse beibehaltenden Zylinder 26 unter Längung der unteren Feder 17 ausfährt (Figur 3), ehe sich der Zylinder 26 gemeinsam mit dem Laserschneidkopf 5 längs der Kolbenstange 19 nach oben bewegt und dadurch den Laserschneidkopf 5 in die werkstückferne Parkstellung überführt (Figur 2).

## Patentansprüche

1. Werkzeugmaschine zum Bearbeiten von Werkstücken, insbesondere von Blechen (2),
• mit einer Tragstruktur (3),
• mit einer an der Tragstruktur (3) gelagerten Stanzvorrichtung (4), mittels derer ein Werkstück stanzend bearbeitbar ist,
• mit einer an der Tragstruktur (3) gelagerten Laserbearbeitungsvorrichtung (5), mittels derer das Werkstück laserbearbeitbar ist und die über die Tragstruktur (3) an die Stanzvorrichtung (4) derart angebunden ist, dass sie durch den Betrieb der Stanzvorrichtung (4) zu einer Bewegung anregbar ist,
• mit einer Laser-Zustellvorrichtung (25), mittels derer die Laserbearbeitungsvorrichtung (5) zur Positionierung gegenüber dem Werkstück mit einer Aktivierungsbewegung in eine Funktionsstellung und außerdem in eine von der Funktionsstellung abliegende Stellung zustellbar ist, wobei das Werkstück mittels der in die Funktionsstellung zugestellten Laserbearbeitungsvorrichtung (5) laserbearbeitbar ist sowie
• mit einer zwischen der Stanzvorrichtung (4) und der Laserbearbeitungsvorrichtung (5) vorgesehenen Federungsvorrichtung (16), die eine Federsteifigkeit aufweist und über welche die Laserbearbeitungsvorrichtung (5) unter Reduzierung der Anregung durch den Betrieb der Stanzvorrichtung (4) an der Tragstruktur (3) abstützbar ist,
**dadurch gekennzeichnet, dass**
die Laser-Zustellvorrichtung (25) als Stellvorrichtung für die Federungsvorrichtung (16) vorgesehen ist und dass mittels der Laser-Zustellvorrichtung (25) die Federsteifigkeit der Federungsvorrichtung (16) derart einstellbar ist, dass der Funktionsstellung der Laserbearbeitungsvorrichtung (5) eine höhere Federsteifigkeit zugeordnet ist als der von der Funktionsstellung abliegenden Stellung der Laserbearbeitungsvorrichtung (5).

2. Werkzeugmaschine nach Anspruch 1, **dadurch gekennzeichnet, dass** die zwischen der Stanzvorrichtung (4) und der Laserbearbeitungsvorrichtung (5) vorgesehene Federungsvorrichtung (16) eine Feder (17) aufweist, über welche die Laserbearbeitungsvorrichtung (5) an der Tragstruktur (3) abgestützt ist und die in der Richtung der Abstützung der Laserbearbeitungsvorrichtung (5) eine Federlänge aufweist und dass die Federsteifigkeit der Federungsvorrichtung (16) mittels der Laser-Zustellvorrichtung (25) einstellbar ist, indem mittels der Laser-Zustellvorrichtung (25) die Federlänge der Feder (17) der Federungsvorrichtung (16) derart veränderbar ist, dass die Federlänge bei Funktionssteliung der Laserbearbeitungsvorrichtung (5) gegenüber der Federlänge bei der von der Funktionsstellung abliegenden Stellung der Laserbearbeitungsvorrichtung (5) reduziert und somit die Feder (17) der Federungsvorrichtung (16) bei Funktionsstellung der Laserbearbeitungsvorrichtung (5) gestaucht ist.

3. Werkzeugmaschine nach Anspruch 2, **dadurch gekennzeichnet, dass** ein in der Richtung (29) der Aktivierungsbewegung wirksamer tragstrukturseitiger Vorrichtungsanschlag (22) für die Laserbearbeitungsvorrichtung (5) vorgesehen ist, an welchem die in die Funktionsstellung zugestellte Laserbearbeitungsvorrichtung (5) in der Richtung (29) der Aktivierungsbewegung abgestützt ist, dass die Laserbearbeitungsvorrichtung (5) über die Feder (17) der Federungsvorrichtung (16) in der Gegenrichtung (11) der Aktivierungsbewegung an einem tragstrukturseitigen Federwiderlager abgestützt ist und dass bei in der Funktionsstellung an dem tragstrukturseitigen Vorrichtungsanschlag (22) in der Richtung (29) der Aktivierungsbewegung abgestützter Laserbearbeitungsvorrichtung (5) die Feder (17) der Federungsvorrichtung (16) mittels der Laser-Zustellvorrichtung (25) gestaucht ist.

4. Werkzeugmaschine nach Anspruch 3, **dadurch gekennzeichnet, dass** die Laser-Zustellvorrichtung (25) ein der Tragstruktur (3) zugeordnetes tragstrukturseitiges Antriebselement sowie ein mit der Laserbearbeitungsvorrichtung (5) bewegungsverbundenes vorrichtungsseitiges Antriebselement (26) aufweist, welches antreibbar ist und mit dem tragstrukturseitigen Antriebselement zusammenwirkt,
• wobei das vorrichtungsseitige Antriebselement (26) der Laser-Zustellvorrichtung (25) relativ zu dem tragstrukturseitigen Antriebselement der Laser-Zustellvorrichtung (25) bewegbar ist und dadurch die Laserbearbeitungsvorrichtung (5) mit der Aktivierungsbewegung bewegbar ist,
• wobei das tragstrukturseitige Antriebselement der Laser-Zustellvorrichtung (25) und über dieses das vorrichtungsseitige Antriebselement (26) und die Laserbearbeitungsvorrichtung (5) über die Feder (17) der Federungsvorrichtung (16) in der Gegenrichtung (11) der Aktivierungsbewegung der Laserbearbeitungsvorrichtung (5) an der Tragstruktur (3) abgestützt sind und
• wobei bei in der Funktionsstellung an dem tragstrukturseitigen Vorrichtungsanschlag (22) in der Richtung (29) der Aktivierungsbewegung abgestützter Laserbearbeitungsvorrichtung (5) das tragstrukturseitige Antriebselement unter Stauchen der Feder (17) der Federungsvorrichtung (16) relativ zu dem vorrichtungsseitigen Antriebselement (26) in der Gegenrichtung (11) der Aktivierungsbewegung bewegbar ist.

5. Werkzeugmaschine nach Anspruch 4, **dadurch gekennzeichnet, dass** die Laserbearbeitungsvorrichtung (5) mittels der Laser-Zustellvorrichtung (25) längs einer Laser-Zustellachse (9) mit einer Aktivierungsbewegung in die Funktionsstellung und außerdem in der Gegenrichtung (11) der Aktivierungsbewegung in die von der Funktionsstellung abliegende Stellung zustellbar ist,
• wobei das vorrichtungsseitige Antriebselement (26) der Laser-Zustellvorrichtung (25) längs der Laser-Zustellachse (9) relativ zu dem tragstrukturseitigen Antriebselement der Laser-Zustellvorrichtung (25) bewegbar ist,
• wobei das tragstrukturseitige Antriebselement und über dieses das vorrichtungsseitige Antriebselement (26) und die Laserbearbeitungsvorrichtung (5) über die Feder (17) der Federungsvorrichtung (16) längs der Laser-Zustellachse (9) in der Gegenrichtung (11) der Aktivierungsbewegung der Laserbearbeitungsvorrichtung (5) an der Tragstruktur (3) abgestützt sind und
• wobei bei in der Funktionsstellung an dem tragstrukturseitigen Vorrichtungsanschlag (22) längs der Laser-Zustellachse (9) in der Richtung (29) der Aktivierungsbewegung abgestützter Laserbearbeitungsvorrichtung (5) das tragstrukturseitige Antriebselement unter Stauchen der Feder (17) der Federungsvorrichtung (16) relativ zu dem vorrichtungsseitigen Antriebselement (26) längs der Laser-Zustellachse (9) in der Gegenrichtung (11) der Aktivierungsbewegung bewegbar ist.

6. Werkzeugmaschine nach Anspruch 5, **dadurch gekennzeichnet, dass** als Laser-Zustellvorrichtung (25) eine Kolben-Zylinder-Einheit vorgesehen ist und dass ein längs der Laser-Zustellachse (9) verlaufender Zylinder der Kolben-Zylinder-Einheit als vorrichtungsseitiges Antriebselement (26) und ein in dem Zylinder längs der Laser-Zustellachse (9) beweglich geführter Kolben der Kolben-Zylinder-Einheit als tragstrukturseitiges Antriebselement der Kolben-Zylinder-Einheit vorgesehen sind.

7. Werkzeugmaschine nach Anspruch 6, **dadurch gekennzeichnet, dass** die Kolben-Zylinder-Einheit als pneumatische Kolben-Zylinder-Einheit ausgebildet ist.

8. Werkzeugmaschine nach einem der Ansprüche 4 bis 7, **dadurch gekennzeichnet, dass** das tragstrukturseitige Antriebselement und über dieses das vorrichtungsseitige Antriebselement (26) und die Laserbearbeitungsvorrichtung (5) über eine weitere Feder (18) der Federungsvorrichtung (6) in der Richtung (29) der Aktivierungsbewegung der Laserbearbeitungsvorrichtung (5) an der Tragstruktur (3) abgestützt sind.

9. Werkzeugmaschine nach einem der Ansprüche 3 bis 8, **dadurch gekennzeichnet, dass** der tragstrukturseitige Vorrichtungsanschlag (22) für die Laserbearbeitungsvorrichtung (5) an der von der Seite der Abstützung der Laserbearbeitungsvorrichtung (5) abliegenden Seite das tragstrukturseitige Federwiderlager ausbildet, an welchem die Feder (17) der Federungsvorrichtung (16) in der Gegenrichtung (11) der Aktivierungsbewegung der Laserbearbeitungsvorrichtung (5) abgestützt ist.

10. Werkzeugmaschine nach einem der vorhergehenden Ansprüche, **dadurch gekennzeichnet, dass** die Tragstruktur (3) gemeinschaftlich mit der Stanzvorrichtung (4) und der Laserbearbeitungsvorrichtung (5) an einem Maschinengestell (2) der Werkzeugmaschine in Querrichtung der Richtung (29) der Aktivierungsbewegung der Laserbearbeitungsvorrichtung (5) bewegbar ist.

## Claims

1. Machine tool for machining workpieces, in particular metal sheets (2),
• comprising a support structure (3),
• comprising a punching device (4) which is mounted on the support structure (3) and by means of which a workpiece can be punched,
• comprising a laser machining device (5) which is mounted on the support structure (3) and by means of which the workpiece can be laser-machined and which is connected to the punching device (4) by means of the support structure (3) such that the operation of the punching device (4) can stimulate said laser machining device to move,
• comprising a laser positioning device (25) by means of which, for positioning relative to the workpiece, the laser machining device (5) can be moved by means of an activation movement into a functional position and into a position remote from the functional position, the workpiece being laser-machinable by means of the laser machining device (5) positioned in the functional position, and
• comprising a suspension device (16) which is provided between the punching device (4) and the laser machining device (5) and has a spring rate, and by means of which the laser machining device (5) can be supported on the support structure (3) so as to reduce the stimulation by the operation of the punching device (4),
**characterised in that**
the laser positioning device (25) is provided as an adjusting device for the suspension device (16) and **in that**, by means of the laser positioning device (25), the spring rate of the suspension device (16) can be adjusted such that the functional position of the laser machining device (5) is assigned a higher spring rate than that assigned to the position of the laser machining device (5) that is remote from the functional position.

2. Machine tool according to claim 1, **characterised in that** the suspension device (16) provided between the punching device (4) and the laser machining device (5) comprises a spring (17), by means of which the laser machining device (5) is supported on the support structure (3) and which has a spring length in the direction of the support of the laser machining device (5), and **in that** the spring rate of the suspension device (16) can be adjusted by means of the laser positioning device (25) **in that** the spring length of the spring (17) of the suspension device (16) can be changed by means of the laser positioning device (25) such that the spring length is reduced in the functional position of the laser machining device (5) relative to the spring length in the position of the laser machining device (5) that is remote from the functional position, and thus the spring (17) of the suspension device (16) is compressed in the functional position of the laser machining device (5).

3. Machine tool according to claim 2, **characterised in that** a support structure-side device stop (22) which acts in the direction (29) of the activation movement is provided for the laser machining device (5), on which stop the laser machining device (5) positioned in the functional position is supported in the direction (29) of the activation movement, **in that** the laser machining device (5) is supported on a support structure-side spring brace in the opposite direction (11) to the activation movement by means of the spring (17) of the suspension device (16), and **in that**, when the laser machining device (5) is supported on the support structure-side device stop (22) in the direction (29) of the activation movement in the functional position, the spring (17) of the suspension device (16) is compressed by means of the laser positioning device (25).

4. Machine tool according to claim 3, **characterised in that** the laser positioning device (25) comprises a support structure-side drive element which is assigned to the support structure (3), and a device-side drive element (26) which is connected for movement to the laser machining device (5), which can be driven, and which interacts with the support structure-side drive element,
• it being possible to move the device-side drive element (26) of the laser positioning device (25) relative to the support structure-side drive element of the laser positioning device (25), and the laser machining device (5) thus being movable to perform the activation movement,
• the support structure-side drive element of the laser positioning device (25) and, by means of said element, the device-side drive element (26) and the laser machining device (5), being supported on the support structure (3) in the opposite direction (11) to the activation movement of the laser machining device (5) by means of the spring (17) of the suspension device (16),
• it being possible, with the laser machining device (5) supported in the functional position on the support structure-side device stop (22) in the direction (29) of the activation movement, to move the support structure-side drive element relative to the device-side drive element (26) in the opposite direction (11) to the activation movement so as to compress the spring (17) of the suspension device (16).

5. Machine tool according to claim 4, **characterised in that** the laser machining device (5) can be positioned along a laser positioning axis (9) by means of the laser positioning device (25) into the functional position by means of an activation movement and also, in the opposite direction (11) to the activation movement, into the position remote from the functional position,
• it being possible to move the device-side drive element (26) of the laser positioning device (25) along the laser positioning axis (9) relative to the support structure-side drive element of the laser positioning device (25),
• the support structure-side drive element and, by means of said element, the device-side drive element (26) and the laser machining device (5) being supported on the support structure (3) along the laser positioning axis (9) in the opposite direction (11) to the activation movement of the laser machining device (5) by means of the spring (17) of the suspension device (16), and
• it being possible, with the laser machining device (5) supported in the functional position on the support structure-side device stop (22) along the laser positioning axis (9) in the direction (29) of the activation movement, to move the support structure-side drive element relative to the device-side drive element (26) along the laser positioning axis (9) in the opposite direction (11) to the activation movement so as to compress the spring (17) of the suspension device (16).

6. Machine tool according to claim 5, **characterised in that** a piston-cylinder unit is provided as the laser positioning device (25), and **in that** a cylinder of the piston-cylinder unit extending along the laser positioning axis (9) is provided as the device-side drive element (26) and a piston of the piston-cylinder unit which is movably guided in the cylinder along the laser positioning axis (9) is provided as the support structure-side drive element of the piston-cylinder unit.

7. Machine tool according to claim 6, **characterised in that** the piston-cylinder unit is designed as a pneumatic piston-cylinder unit.

8. Machine tool according to any one of claims 4 to 7, **characterised in that** the support structure-side drive element and, by means of said element, the device-side drive element (26) and the laser machining device (5) are supported on the support structure (3) in the direction (29) of the activation movement of the laser machining device (5) by means of an additional spring (18) of the suspension device (6).

9. Machine tool according to any one of claims 3 to 8, **characterised in that** the support structure-side device stop (22) for the laser machining device (5) on the side remote from the side of the support of the laser machining device (5) forms the support structure-side spring brace on which the spring (17) of the suspension device (16) is supported in the opposite direction (11) to the activation movement of the laser machining device (5).

10. Machine tool according to any one of the preceding claims, **characterised in that** the support structure (3) can move conjointly with the punching device (4) and with the laser machining device (5) on a machine frame (2) of the machine tool in a direction transverse to the direction (29) of the activation movement of the laser machining device (5).

## Revendications

1. Machine-outil pour l'usinage de pièces, en particulier de tôles (10),
- avec une structure porteuse (3),
- avec un dispositif d'estampage (4) monté sur la structure porteuse (3), au moyen duquel une pièce peut être usinée par estampage,
- avec un dispositif d'usinage laser (5) monté sur la structure porteuse (3), au moyen duquel la pièce peut être usinée au laser et qui, par l'intermédiaire de la structure porteuse (3), est relié au dispositif d'estampage (4) de telle sorte qu'il peut être mis en mouvement par le fonctionnement du dispositif d'estampage (4),
- avec un dispositif de positionnement de laser (25), au moyen duquel le dispositif d'usinage laser (5) peut, afin de le positionner par rapport à la pièce, être avancé par un mouvement d'activation dans une position opérationnelle et en outre dans une position éloignée de la position opérationnelle, sachant que la pièce peut être usinée au laser au moyen du dispositif d'usinage laser (5) avancé dans la position opérationnelle,
- et avec un dispositif de suspension (16), prévu entre le dispositif d'estampage (4) et le dispositif d'usinage laser (5), qui présente une raideur de ressort et par l'intermédiaire duquel le dispositif d'usinage laser (5) peut être appuyé contre la structure porteuse (3), réduisant ainsi sa mise en mouvement par le fonctionnement du dispositif d'estampage (4),
**caractérisée en ce que** le dispositif de positionnement de laser (25) est prévu comme dispositif de réglage pour le dispositif de suspension (16) et **en ce que**, au moyen du dispositif de positionnement de laser (25), la raideur de ressort du dispositif de suspension (16) peut être réglée de telle sorte qu'est associée à la position opérationnelle du dispositif d'usinage laser (5) une raideur de ressort plus élevée qu'à la position du dispositif d'usinage laser (5) qui est éloignée de la position opérationnelle.

2. Machine-outil selon la revendication 1, **caractérisée en ce que** le dispositif de suspension (16) prévu entre le dispositif d'estampage (4) et le dispositif d'usinage laser (5) présente un ressort (17) par l'intermédiaire duquel le dispositif d'usinage laser (5) est appuyé contre la structure porteuse (3) et qui présente une longueur de ressort dans la direction de l'appui du dispositif d'usinage laser (5), et **en ce que** la raideur de ressort du dispositif de suspension (16) peut être réglée au moyen du dispositif de positionnement de laser (25) par le fait que, au moyen du dispositif de positionnement de laser (25), la longueur de ressort du ressort (17) du dispositif de suspension (16) peut être modifiée de telle sorte que la longueur de ressort dans la position opérationnelle du dispositif d'usinage laser (5) est réduite par rapport à la longueur de ressort dans la position du dispositif d'usinage laser (5) qui est éloignée de la position opérationnelle, de sorte que le ressort (17) du dispositif de suspension (16) est comprimé dans la position opérationnelle du dispositif d'usinage laser (5).

3. Machine-outil selon la revendication 2, **caractérisée en ce qu'**il est prévu une butée de dispositif (22) côté structure porteuse pour le dispositif d'usinage laser (5), butée qui est active dans le sens (29) du mouvement d'activation et contre laquelle le dispositif d'usinage laser (5) avancé dans la position opérationnelle est appuyé dans le sens (29) du mouvement d'activation, **en ce que** le dispositif d'usinage laser (5) est, par l'intermédiaire du ressort (17) du dispositif de suspension (16), appuyé dans le sens contraire (11) au mouvement d'activation contre un contre-appui de ressort côté structure porteuse, et **en ce que**, lorsque le dispositif d'usinage laser (5) est appuyé dans la position opérationnelle contre la butée de dispositif (22) côté structure porteuse dans le sens (29) du mouvement d'activation, le ressort (17) du dispositif de suspension (16) est comprimé au moyen du dispositif de positionnement de laser (25).

4. Machine-outil selon la revendication 3, **caractérisée en ce que** le dispositif de positionnement de laser (25) présente un élément d'entraînement côté structure porteuse associé à la structure porteuse (3) ainsi qu'un élément d'entraînement (26) côté dispositif lié en déplacement au dispositif d'usinage laser (5), élément qui peut être entraîné et qui coopère avec l'élément d'entraînement côté structure porteuse,
- sachant que l'élément d'entraînement (26) côté dispositif du dispositif de positionnement de laser (25) peut être déplacé par rapport à l'élément d'entraînement côté structure porteuse du dispositif de positionnement de laser (25), de sorte que le dispositif d'usinage laser (5) peut être déplacé avec le mouvement d'activation,
- sachant que l'élément d'entraînement côté structure porteuse du dispositif de positionnement de laser (25), et par son intermédiaire l'élément d'entraînement (26) côté dispositif et le dispositif d'usinage laser (5), sont soutenus contre la structure porteuse (3) par l'intermédiaire du ressort (17) du dispositif de suspension (16) dans le sens contraire (11) au mouvement d'activation du dispositif d'usinage laser (5),
- et sachant que, lorsque le dispositif d'usinage laser (5) est soutenu dans la position opérationnelle contre la butée de dispositif (22) côté structure porteuse dans le sens (29) du mouvement d'activation, l'élément d'entraînement côté structure porteuse peut être déplacé, avec compression du ressort (17) du dispositif de suspension (16), par rapport à l'élément d'entraînement (26) côté dispositif dans le sens contraire (11) au mouvement d'activation.

5. Machine-outil selon la revendication 4, **caractérisée en ce que** le dispositif d'usinage laser (5) peut, au moyen du dispositif de positionnement de laser (25), être avancé le long d'un axe d'avance de laser (9) avec un mouvement d'activation dans la position opérationnelle et en outre dans le sens contraire (11) au mouvement d'activation dans la position éloignée de la position opérationnelle,
- sachant que l'élément d'entraînement (26) côté dispositif du dispositif de positionnement de laser (25) peut être déplacé le long de l'axe d'avance de laser (9) par rapport à l'élément d'entraînement côté structure porteuse du dispositif de positionnement de laser (25),
- sachant que l'élément d'entraînement côté structure porteuse, et par son intermédiaire l'élément d'entraînement (26) côté dispositif et le dispositif d'usinage laser (5), sont soutenus contre la structure porteuse (3), par l'intermédiaire du ressort (17) du dispositif de suspension (16), le long de l'axe d'avance de laser (9) dans le sens contraire (11) au mouvement d'activation du dispositif d'usinage laser (5),
- et sachant que, lorsque le dispositif d'usinage laser (5) est soutenu dans la position opérationnelle contre la butée de dispositif (22) côté structure porteuse le long de l'axe d'avance de laser (9) dans le sens (29) du mouvement d'activation, l'élément d'entraînement côté structure porteuse peut être déplacé, avec compression du ressort (17) du dispositif de suspension (16), par rapport à l'élément d'entraînement (26) côté dispositif le long de l'axe d'avance de laser (9) dans le sens contraire (11) au mouvement d'activation.

6. Machine-outil selon la revendication 5, **caractérisée en ce qu'**il est prévu comme dispositif de positionnement de laser (25) une unité piston-cylindre, et **en ce qu'**un cylindre, s'étendant le long de l'axe d'avance de laser (9), de l'unité piston-cylindre est prévu comme élément d'entraînement (26) côté dispositif, et un piston, guidé en déplacement le long de l'axe d'avance de laser (9), de l'unité piston-cylindre est prévu comme élément d'entraînement côté structure porteuse de l'unité piston-cylindre.

7. Machine-outil selon la revendication 6, **caractérisée en ce que** l'unité piston-cylindre est réalisée sous forme d'unité piston-cylindre pneumatique.

8. Machine-outil selon l'une des revendications 4 à 7, **caractérisée en ce que** l'élément d'entraînement côté structure porteuse, et par son intermédiaire l'élément d'entraînement (26) côté dispositif et le dispositif d'usinage laser (5), sont soutenus contre la structure porteuse (3) par l'intermédiaire d'un autre ressort (18) du dispositif de suspension (16) dans le sens (29) du mouvement d'activation du dispositif d'usinage laser (5).

9. Machine-outil selon l'une des revendications 3 à 8, **caractérisée en ce que** la butée de dispositif (22) côté structure porteuse pour le dispositif d'usinage laser (5) forme, sur le côté qui est éloigné du côté de l'appui du dispositif d'usinage laser (5), le contre-appui de ressort côté structure porteuse contre lequel le ressort (17) du dispositif de suspension (16) est appuyé dans le sens contraire (11) au mouvement d'activation du dispositif d'usinage laser (5).

10. Machine-outil selon l'une des revendications précédentes, **caractérisée en ce que** la structure porteuse (3) peut être déplacée conjointement avec le dispositif d'estampage (4) et le dispositif d'usinage laser (5) sur un bâti de machine (2) de la machine-outil en direction transversale au sens (29) du mouvement d'activation du dispositif d'usinage laser (5).
